# EUROPEAN PATENT APPLICATION

(11) **EP 3 679 807 A1**
(43) Date of publication of application: **15.07.2020**
(21) Application number: 18854576.8
(22) Date of filing: 07.09.2018
(51) Int. Cl.: A23L 2/00, A23L 2/38, A23L 2/70

(54) **MAGNESIUM-CONTAINING COLORLESS AND TRANSPARENT BEVERAGE**

(30) Priority: 07.09.2017 JP 2017172022
(71) Applicant: Suntory Holdings Limited, Osaka-shi, Osaka 530-8203 (JP)
(72) Inventor: HOMBO, Mizuho, Kawasaki-shi Kanagawa 211-0067 (JP); YASUI, Yohei, Kawasaki-shi Kanagawa 211-0067 (JP); MITO, Mika, Kawasaki-shi Kanagawa 211-0067 (JP)
(74) Representative: Vossius & Partner Patentanwälte Rechtsanwälte mbB
(86) International application number: PCT/JP2018/033168
(87) International publication number: WO 2019/049977

(57) **Abstract**

An object of the present invention is to reduce the harshness coming from magnesium in a magnesium-containing colorless transparent beverage.

Lactose and/or at least one type of maltooligosaccharide are/is added to a magnesium-containing colorless transparent beverage.

## Description

### TECHNICAL FIELD

The present invention relates to magnesium-containing colorless transparent beverages, and in particular to colorless transparent beverages having reduced harshness coming from magnesium.

### BACKGROUND ART

In recent years, flavored water has gained popularity against the backdrop of the rise in consumers' health consciousness and natural preference. Flavored water is a beverage with moderate sweetness produced by adding ingredients such as flavorant, essence, and/or fruit juice to water such as mineral water (including natural mineral water), and is a beverage with a water-like colorless transparent appearance, also called "near-water". Those beverages like flavored water, which are colorless and transparent but have a flavor of fruit or the like and moderate sweetness, generally have such a clean taste and refreshing flavor that one can drink them as an alternative to water, and are characterized by being as easy to drink as or easier to drink than water.

Meanwhile, it is known to be effective to drink a beverage containing a specified amount of minerals for the purpose of efficiently replenishing water and minerals lost from the human body by sweating during exercise or daily life activities (PTLs 1 to 7).

However, it is known that among minerals, magnesium has peculiar tastes such as harshness, and thus it may have an impact on the flavor of a beverage depending on the type of the beverage to which to add it. In particular, colorless transparent beverages like flavored water, due to their nature, have various restrictions on the types and amounts of ingredients added. For example, the amount of an essence, fruit juice, etc. added is significantly restricted for the purpose of ensuring the maintenance of the colorless transparent nature of such beverages. Therefore, colorless transparent beverages are felt to be more prominent in the harshness coming from magnesium as compared to other common beverages (*e.g*., colored beverages or cloudy beverages). Further, there was a problem in that the clean taste and refreshing flavor characteristic of flavored water may be deteriorated only with the use of conventional techniques.

### CITATION LIST

### PATENT LITERATURES

PTL 1: Japanese Unexamined Patent Application Publication No. JP 2004-275143
PTL 2: Japanese Unexamined Patent Application Publication No. JP 2010-252702
PTL 3: Japanese Unexamined Patent Application Publication No. JP 2017-12004
PTL 4: Japanese Unexamined Patent Application Publication No. JP 2016-42812
PTL 5: Japanese Unexamined Patent Application Publication No. JP 2016-7149
PTL 6: Japanese Unexamined Patent Application Publication No. JP 2015-211651
PTL 7: Japanese Unexamined Patent Application Publication No. JP 2015-167523

### SUMMARY OF INVENTION

### TECHNICAL PROBLEM

Therefore, an object of the present invention is to reduce the harshness coming from magnesium in a magnesium-containing colorless transparent beverage.

### SOLUTION TO PROBLEM

The present inventors have made intensive studies to achieve the aforementioned object, and as a result, found that when lactose and/or a maltooligosaccharide are/is incorporated in a magnesium-containing colorless transparent beverage, the harshness coming from magnesium is reduced in the beverage. Based on this finding, the inventors completed the present invention.

More specifically, the present invention is directed, but not limited, to the following.
(1) A beverage comprising magnesium, and lactose and/or at least one type of maltooligosaccharide, wherein the beverage satisfies the following requirements (i) to (v):
   (i) an absorbance at a wavelength of 660 nm of 0.06 or less;
   (ii) a ΔE (color difference) value of 3.5 or less relative to pure water;
   (iii) a magnesium content of 1 to 20 mg/100 mL;
   (iv) a degree of sweetness of 3 to 10; and
   (v) (a) and/or (b) as defined below should be satisfied:
      (a) a lactose content of 0.1 g/100 mL or more;
      (b) a total maltooligosaccharide content of 0.1 g/100 mL or more.
(2) The beverage as set forth in (1), wherein the beverage has a pH of 4 to 7.
(3) A method for producing a beverage comprising magnesium and satisfying the following requirements (i) to (iv):
   (i) an absorbance at a wavelength of 660 nm of 0.06 or less;
   (ii) a ΔE (color difference) value of 3.5 or less relative to pure water;
   (iii) a magnesium content of 1 to 20 mg/100 mL; and
   (iv) a degree of sweetness of 3 to 10;
      the method comprising the step of adding lactose and/or at least one type of maltooligosaccharide so as to ensure that (a) and/or (b) as defined below can be satisfied:
      (a) a lactose content in the beverage should be 0.1 g/100 mL or more;
      (b) a total maltooligosaccharide content in the beverage should be 0.1 g/100 mL or more.
(4) A beverage comprising magnesium, and lactose and/or at least one type of oligosaccharide, wherein the beverage satisfies the following requirements (i) to (iv):
   (i) an absorbance at a wavelength of 660 nm of 0.06 or less;
   (ii) a ΔE (color difference) value of 3.5 or less relative to pure water;
   (iii) a magnesium content of 1 to 20 mg/100 mL; and
   (iv) (a) and/or (b) as defined below should be satisfied:
      (a) a lactose content of 0.1 g/100 mL or more;
      (b) a total oligosaccharide content of 0.1 g/100 mL or more.
(5) The beverage as set forth in (4), wherein the beverage has a degree of sweetness of 3 to 10.
(6) The beverage as set forth in (4) or (5), wherein the beverage has a pH of 4 to 7.
(7) A method for producing a beverage comprising magnesium and satisfying the following requirements (i) to (iii):
   (i) an absorbance at a wavelength of 660 nm of 0.06 or less;
   (ii) a ΔE (color difference) value of 3.5 or less relative to pure water; and
   (iii) a magnesium content of 1 to 20 mg/100 mL;
      the method comprising the step of adding an ingredient so as to ensure that the beverage contains lactose and/or at least one type of oligosaccharide, and the method further comprising steps (a) and/or (b) as defined below:
      (a) adjusting a lactose content in the beverage to 0.1 g/100 mL or more;
      (b) adjusting a total oligosaccharide content in the beverage to 0.1 g/100 mL or more.

### ADVANTAGEOUS EFFECTS OF INVENTION

The present invention can provide a colorless transparent beverage characterized in that while magnesium is contained in the beverage, the harshness coming from magnesium is reduced. This invention can also provide a colorless transparent beverage having reduced harshness coming from magnesium and maintaining a clean taste and a refreshing flavor. Additionally, the "harshness" as referred to herein means an unpleasant taste that feels as if the tongue is irritated upon drinking, and differs from "bitterness" and "astringency". The "harshness coming from magnesium" as referred to in this invention refers to the peculiar harshness characteristic of magnesium, and differs from those coming from other minerals.

### DESCRIPTION OF EMBODIMENTS

The following provides descriptions of the beverage and related method according to the present invention. All numerical ranges defined herein by lower and upper limits, i.e. defined as "lower limit to upper limit", include their lower and upper limits. For example, the range defined as "1 to 2" includes 1 and 2.

### (Magnesium)

The beverage of the present invention comprises magnesium. In this invention, magnesium can be added to the beverage in the form of a salt that can be used in beverages and foods, or in the form of deep ocean water, seaweed essence, or the like which are rich in magnesium. Examples of the salt that can be used to add magnesium to the beverage of this invention include, but are not limited to, magnesium chloride and magnesium lactate.

The magnesium content in the beverage of the present invention is in the range of 1 to 20 mg/100 mL, preferably 2.5 to 17.5 mg/100 mL, more preferably 5 to 15 mg/100 mL. When the magnesium content in a colorless transparent beverage falls within the aforementioned range, harshness is prominently felt upon drinking this beverage.

When magnesium is used in the present invention in the form of a salt, the magnesium content in the beverage can be calculated in terms of the content of its free form. Further, in the context of this invention, the magnesium content or concentration in a beverage (sample solution) can be measured by a known procedure using an ICP optical emission spectrometer.

### (Lactose)

The beverage of the present invention can contain lactose. The lactose content in the beverage of this invention is 0.1 g/100 mL or more, preferably 0.15 g/100 mL or more, more preferably 0.2 g/100 mL or more. The upper limit of the lactose content in the beverage of this invention is not particularly limited, but is preferably 35 g/100 mL or less. The lactose content is more preferably 20 g/100 mL or less, still more preferably 10 g/100 mL or less. If the lactose content in the beverage is less than 0.1 g/100 mL, the harshness coming from magnesium tends to be not effectively reduced. If the lactose content in the beverage exceeds 35 g/100 mL, the effect of this invention, which is to reduce the harshness of magnesium, can be achieved, but the beverage tends to become excessively sweet, so that the taste of the beverage itself may be deteriorated. The lactose content in the beverage of this invention is typically in the range of 0.1 to 35 g/100 mL, 0.15 to 20 g/100 mL, or 0.2 to 10 g/100 mL.

In the present invention, the lactose content in the beverage can be measured by a known procedure using high-performance liquid chromatography (HPLC).

The weight ratio of lactose content to magnesium content in the beverage of the present invention (lactose content/magnesium content) is not particularly limited, but is for example 20 or more, preferably 25 or more, more preferably 30 or more. Also, this weight ratio is, for example but not particularly limited to, 2100 or less, preferably 2000 or less, more preferably 1900 or less. More specifically, this weight ratio is, for example but not particularly limited to, in the range of 20 to 2100, preferably 25 to 2000, more preferably 30 to 1900.

### (Oligosaccharide)

The beverage of the present invention can contain an oligosaccharide. The "oligosaccharide" as referred to herein refers to a sugar composed of 3 to 7 monosaccharides linked through glycosidic linkages. In other words, the "oligosaccharide" is a sugar characterized in that the number of monosaccharides constituting a sugar chain is in the range of 3 to 7. The oligosaccharide of this invention is a chain oligosaccharide, or namely an oligosaccharide composed of unit constituent saccharides linked in the form of a straight chain and/or a branched chain, and does not include a cyclic oligosaccharide composed of unit constituent saccharides linked in a cyclic form. The chain oligosaccharide of this invention can be a straight-chain oligosaccharide or a branched-chain oligosaccharide, with a straight-chain oligosaccharide being preferred. Examples of the unit constituent saccharide include, but are not limited to, glucose, fructose, xylose, galactose, and mannose, with glucose being particularly preferred. The mode of linkage of unit constituent saccharides is preferably one or two selected from α-1,4 linkage and α-1,6 linkage, more preferably α-1,4 linkage. Examples of the oligosaccharide include, but are not limited to, maltooligosaccharides (*e.g*., maltotriose, maltotetraose, maltopentaose, maltohexaose, maltoheptaose), xylooligosaccharides (*e.g*., xylotriose, xylotetraose, xylopentaose, xylohexaose, xyloheptaose), and nigerooligosaccharides (*e.g*., nigerotriose, nigerotetraose, nigeropentaose, nigerohexaose, nigeroheptaose). A preferred oligosaccharide is a maltooligosaccharide, more preferably maltotriose. The beverage of this invention may contain only a single type of oligosaccharide or two or more types of oligosaccharides. Different types of oligosaccharide mixtures are commercially available, and can be used in the beverage of this invention.

The total oligosaccharide content in the beverage of the present invention is 0.1 g/100 mL or more, preferably 0.15 g/100 mL or more, more preferably 0.2 g/100 mL or more. The upper limit of the total oligosaccharide content in the beverage of this invention is not particularly limited, but is preferably 70 g/100 mL or less. The total oligosaccharide content is more preferably 65 g/100 mL or less, still more preferably 60 g/100 mL or less. If the total oligosaccharide content in the beverage is less than 0.1 g/100 mL, the harshness coming from magnesium tends to be not effectively reduced. If the total oligosaccharide content in the beverage exceeds 70 g/100 mL, the effect of this invention, which is to reduce the harshness of magnesium, can be achieved, but the beverage tends to become excessively sweet, so that the taste of the beverage itself may be deteriorated. The total oligosaccharide content in the beverage of this invention is typically in the range of 0.1 to 70 g/100 mL, 0.15 to 65 g/100 mL, 0.2 to 60 g/100 mL, 0.2 to 10 g/100 mL, or 0.2 to 9 g/100 mL. When the oligosaccharide used is a maltooligosaccharide, the aforementioned oligosaccharide content can be applied as a total maltooligosaccharide content.

In the present invention, the total oligosaccharide content in the beverage can be measured using LC-MS.

The weight ratio of total oligosaccharide content to magnesium content in the beverage of the present invention (total oligosaccharide content/magnesium content) is not particularly limited, but is for example 15 or more, preferably 20 or more, more preferably 25 or more. Also, this weight ratio is, for example but not particularly limited to, 2100 or less, preferably 2000 or less, more preferably 1900 or less. More specifically, this weight ratio is, for example but not particularly limited to, in the range of 15 to 2100, 20 to 2000, or 25 to 1900. When the oligosaccharide used is a maltooligosaccharide, the aforementioned weight ratio can be applied as a weight ratio of total maltooligosaccharide content to magnesium content (total maltooligosaccharide content/magnesium content).

### (Colorless transparent beverage)

The beverage of the present invention is colorless. The colorless appearance of the beverage can be defined by a ΔE (color difference) value of transmitted light as measured relative to pure water using a colorimetric color difference meter (*e.g*., ZE 2000 (produced by Nippon Denshoku Industries Co., Ltd.)). To be specific, the ΔE value of the beverage of this invention as measured relative to pure water is 3.5 or less. The ΔE value is preferably 2.3 or less.

Also, the beverage of the present invention is transparent. By stating that "the beverage is transparent", it is meant that the beverage is not white turbid like so-called sports drinks nor cloudy like cloudy fruit juices, and is visually transparent like water. The transparency of the beverage can be converted to numerical data using a known technique for measuring liquid turbidity. For example, the transparency of the beverage can be defined by absorbance at a wavelength of 660 nm as measured using an ultraviolet visible spectrophotometer (*e.g*., UV-1600 (produced by Shimadzu Corporation)). To be specific, the beverage of this invention has an absorbance at a wavelength of 660 nm of 0.06 or less.

### (Degree of sweetness)

The beverage of the present invention can have moderate sweetness. The degree of sweetness of the beverage of this invention is not particularly limited, but is for example in the range of 3 to 10, preferably 3 to 9, more preferably 3 to 8, still more preferably 3 to 7.

The "degree of sweetness", as referred to herein, is an index that indicates the sweetness of a beverage as determined based on the sweetness of 100 g of a beverage containing 1 g of sucrose, which is taken as "1". The degree of sweetness of the beverage is determined by converting the content of each sweetness component into a sucrose equivalent based on the relative ratio of the sweetness of each sweetness component to that of sucrose, which is taken as 1, and then by totaling the sucrose sweetness equivalents of all sweetness components (including sweetness components derived from fruit juice, essence, etc.) contained in the beverage. The relative ratios of the sweetness of different representative sweetness components to that of sucrose, which is taken as 1, are listed in Table 1. With regard to other sweetness components not listed in Table 1, the degrees of sweetness presented by manufacturers who produce or sell those other sweetness components can be used, or the degrees of sweetness can be determined by sensory evaluation.

**[Table 1]**

| Sweetness component | Degree of sweetness |
|---|---|
| | |
| Sucrose | 1 |
| Glucose | 0.6 |
| Fructose | 1.2 |
| HFCS (with 55% fructose) | 1 |
| Lactose | 0.3 |
| Trehalose | 0.4 |
| D-psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Saccharified reduced starch | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Cyclamate | 30 |
| Dulcin | 200 |
| Neotame | 1000 |
| Neohesperidin | 1000 |
| Monellin | 25000 |
| Lysozyme | 20 |

In the present invention, the degree of sweetness of the beverage can be adjusted using a sweetness component(s). As the sweetness component(s), lactose and/or an oligosaccharide can be used, but besides them, the sweetness components listed in Table 1 may also be used. Other particularly preferred sweetness components besides lactose and an oligosaccharide are fructose, sugar, high-fructose corn syrup (with 55% fructose), glucose, and sucrose. It is better not to use a high-intensity sweetener in the beverage of this invention, since the effect of this invention is easier to perceive. As referred to herein, the high-intensity sweetener refers to an artificial or natural sweetener having a degree of sweetness of 10 or more times as high as sucrose. In this invention, such a sweetness component may be directly added as a sweetener to the beverage, or a fruit juice, essence or the like containing such a sweetness component may be added to the beverage.

### (pH)

The pH of the beverage of the present invention is for example in the range of 4 to 7, preferably 4 to 6, more preferably 5 to 6. If the pH of the beverage is less than 3, the effect of this invention may not be fully obtained.

### (Acidulant)

The beverage of the present invention may contain an acidulant. The pH of the beverage of this invention can be adjusted by adding an acidulant. The type of an acidulant used in this invention is not particularly limited, and typical examples of the acidulant include citric acid, malic acid, lactic acid, phosphoric acid, tartaric acid, gluconic acid, and salts thereof. In particular, citric acid, malic acid, phosphoric acid, and salts thereof are preferred. The beverage of this invention may contain only a single type of acidulant or two or more types of acidulants. The term "acidulant" as used herein in relation to this invention encompasses not only food additives but also acids derived from fruit juice. To be specific, if the beverage contains a fruit juice which contains such an acid as listed above, said acid is regarded as an acidulant.

### (Tannin)

The tannin content in the beverage of the present invention is not particularly limited, but is preferably 150 ppm or less, since tannin, when present in large amounts, tends to cause coloration of a beverage. If the tannin content in the beverage exceeds 150 ppm, the beverage may be colored so that it may not be kept colorless and transparent. Since tannin has a peculiar astringent taste, it may impair the palatability of a beverage when it is present in the beverage in large amounts.

### (Caffeine)

The beverage of the present invention preferably contains caffeine. The preferred concentration of caffeine in the beverage is in the range of 100 to 200 ppm. With the aid of the stimulus generated by a moderate concentration of caffeine, the effect of this invention can be perceived more prominently. However, if the caffeine concentration exceeds 200 ppm, the palatability of the beverage may be impaired due to the bitterness of caffeine.

### (Other components)

In addition to the different components described hereinabove, various additives used in common beverages, such as flavorant, sugar, enrichment (*e.g*., vitamin), antioxidant, emulsifier, preservative, essence, dietary fiber, pH adjustor, and quality stabilizer, can be added to the beverage of the present invention, to the extent that such additives do not impair the effect of the present invention. In particular, since the beverage of this invention is characterized by being colorless and transparent, there is a significant limitation on the amount added of an essence, fruit juice, etc. Thus, in order to compensate for this limitation, it is preferred to add a flavorant. Preferred flavorants include tea flavor, coffee flavor, and milk flavor.

### (Beverage)

The type of the beverage of the present invention is not particularly limited as long as the beverage is a colorless transparent beverage contemplated by this invention, or namely a soft drink. The inventive beverage can be of any type, including nutritional beverage, functional beverage, flavored water (near water) beverage, tea beverage (*e.g*., black tea, oolong tea), coffee beverage, or carbonated beverage, with flavored water being preferred. In one embodiment, the beverage is preferably a tea-flavored beverage, more preferably a black tea-flavored beverage, particularly preferably a milky tea-flavored beverage. In another embodiment, the beverage is preferably a coffee-flavored beverage, more preferably a milky coffee-flavored beverage. In contrast, alcoholic beverages with an alcohol content of 1% or more are not preferred, since the effect of this invention may be impeded by an alcohol contained in the beverage.

The beverage of the present invention is preferably a packaged beverage, which is a beverage that is heat sterilized and packed in a package. The package used is not particularly limited, and exemplary packages include PET bottle, aluminum can, steel can, carton, cup for chilled drink, and glass bottle. *Inter alia*, it is preferred to use a colorless transparent package such as PET bottle, since one can see the characteristic colorless transparent appearance of the beverage of this invention while the beverage is packed in such a package. When heat sterilization is performed, the method of heat sterilization is not particularly limited. Heat sterilization can be performed using a common technique such as UHT sterilization or retort sterilization. The temperature conditions for heat sterilization process are not particularly limited, and are, for example, 65 to 130°C, preferably 85 to 120°C, for 10 to 40 minutes. However, any other sterilization process may also be performed at an appropriate temperature for several seconds, such as 5 to 30 seconds, as long as such a process can achieve a comparable sterilizing value to that process under the aforementioned conditions.

### (Method)

In another aspect, the present invention is directed to a method for producing a beverage comprising magnesium and satisfying the following requirements (i) to (iv):
(i) an absorbance at a wavelength of 660 nm of 0.06 or less;
(ii) a ΔE (color difference) value of 3.5 or less relative to pure water;
(iii) a magnesium content of 1 to 20 mg/100 mL; and
(iv) a degree of sweetness of 3 to 10.

This method comprises the step of adding lactose and/or at least one type of maltooligosaccharide so as to ensure that (a) and/or (b) as defined below can be satisfied:
(a) a lactose content in the beverage should be 0.1 g/100 mL or more;
(b) a total maltooligosaccharide content in the beverage should be 0.1 g/100 mL or more.

Further, since this method can reduce the harshness coming from magnesium felt upon drinking of the beverage, the present invention is also directed to a method for reducing the harshness coming from magnesium in the beverage.

The types, contents and weight ratios of the components contained in the beverage, the color difference, absorbance, degree of sweetness and pH of the beverage, and preferred ranges thereof, as well as the adjustment procedures thereof are as described above in relation to the beverage of this invention or are obvious from the descriptions given above. The timings of different steps are not limited. For example, the aforementioned step can be performed simultaneously with, or separately from, other steps such as color difference adjustment step, absorbance adjustment step, degree of sweetness adjustment step, pH adjustment step, and magnesium content adjustment step, or all those steps can be performed in random order. Any procedure can be adopted as long as the beverage finally obtained satisfies the aforementioned requirements.

### EXAMPLES

Hereunder, the present invention will be described by way of working examples, but this invention is not limited to these examples.

### (Test Example 1)

Different beverages were prepared by mixing water with different ingredients in different amounts as indicated in the table given below. The degree of sweetness of the beverages was adjusted with sugar, and the pH of the beverages was adjusted with phosphoric acid and trisodium citrate. However, no sugar was used in Trial Product 14, and no phosphoric acid nor trisodium citrate were used in Trial Product 15. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water.

The different beverages were rated by 3 panelists on whether the harshness coming from magnesium was felt upon drinking. To be specific, the beverages were rated on a six-grade scale from 1 to 6, with "1" being "harshness coming from magnesium is strongly felt", and "6" being "no harshness is felt". The averages of their ratings are shown in the table given below. Before the sensory evaluation, the panelists had confirmed the relationship between the different intensities of harshness and their corresponding ratings using a sample serving as a standard for evaluation, so as to ensure that their ratings were standardized as much as possible. The following six scores were used for the sensory evaluation.

| | |
|---|---|
| 6 points: | No harshness is felt |
| 5 points: | Little harshness is felt |
| 4 points: | Harshness is slightly felt |
| 3 points: | Harshness is somewhat felt |
| 2 points: | Harshness is noticeably felt |
| 1 point: | Harshness is strongly felt |

The beverages rated as 1 or 2 points were regarded as not maintaining a clean taste or refreshing flavor characteristic of flavored water, and those rated as 3 to 6 points were regarded as maintaining a clean taste or refreshing flavor characteristic of flavored water.

**[Table 2]**

| | 1 | 2 | 3 | 4 | 5 | 6 | 7 | 8 |
|---|---|---|---|---|---|---|---|---|
| Lactose (g/100mL) | 0 | 0.3 | 0 | 0.1 | 0.3 | 1.0 | 5.0 | 10.0 |
| Magnesium chloride (mg/100mL) | 0 | 8.37 | 41.8 | 41.8 | 41.8 | 41.8 | 41.8 | 41.8 |
| Degree of sweetness | 5 | 5 | 5 | 5 | 5 | 5 | 7 | 8 |
| Magnesium (mg/100mL) | 0 | 1 | 5 | 5 | 5 | 5 | 5 | 5 |
| pH | 5.5 | 5.5 | 5.5 | 5.5 | 5.5 | 5.5 | 5.5 | 5.5 |
| Lactose/magnesium | - | 300 | 0 | 20 | 60 | 200 | 1000 | 2000 |
| Sensory rating | 6.0 | 4.3 | 1.7 | 4.3 | 4.7 | 5.7 | 5.7 | 5.3 |
| | | | | | | | | |
| | 9 | 10 | 11 | 12 | 13 | 14 | 15 | |
| Lactose (g/100mL) | 0.4 | 0 | 0.3 | 0 | 0.3 | 10.4 | 0.3 | |
| Magnesium chloride (mg/100mL) | 167 | 41.8 | 41.8 | 41.8 | 41.8 | 41.8 | 41.8 | |
| Degree of sweetness | 5 | 5 | 5 | 5 | 5 | 3 | 5 | |
| Magnesium (mg/100mL) | 20 | 5 | 5 | 5 | 5 | 5 | 5 | |
| pH | 5.5 | 4.0 | 4.0 | 7.0 | 7.0 | 5.5 | 6.2 | |
| Lactose/magnesium | 20 | 0 | 60 | 0 | 60 | 2080 | 60 | |
| Sensory rating | 3.0 | 2.0 | 4.3 | 1.3 | 3.3 | 4.3 | 3.7 | |

As evident from the table given above, lactose functioned to reduce the harshness coming from magnesium. Also, particularly superior effect was observed when the lactose content and the weight ratio of lactose/magnesium fell within the particular ranges. The effect of lactose was observed even in a sample prepared without the use of sugar (Trial Product 14).

### (Test Example 2)

Different beverages were prepared by mixing water with different ingredients in different amounts as indicated in the table given below. The oligosaccharide used was Fujioligo #360 (produced by Nihon Shokuhin Kako Co., Ltd.; percent content of maltooligosaccharides composed of 3 to 7 sugar chain-constituting monosaccharides: 70%; percent maltotriose content: 60%; degree of sweetness: 0.3). The degree of sweetness of the beverages was adjusted with sugar, and the pH of the beverages was adjusted to different values as indicated in the table given below, with the use of phosphoric acid and trisodium citrate. However, no sugar was used in Trial Product 14, and no phosphoric acid nor trisodium citrate were used in Trial Product 15. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the table given below.

**[Table 3]**

| | 1 | 2 | 3 | 4 | 5 | 6 | 7 | 8 |
|---|---|---|---|---|---|---|---|---|
| Fujioligo #360 (g/100mL) | 0 | 0.4 | 0 | 0.1 | 0.4 | 1.4 | 7.1 | 14.3 |
| Magnesium chloride (mg/100mL) | 0 | 8.37 | 41.8 | 41.8 | 41.8 | 41.8 | 41.8 | 41.8 |
| Maltooligosaccharide (g/100mL) | 0 | 0.3 | 0 | 0.1 | 0.3 | 1.0 | 5.0 | 10.0 |
| Degree of sweetness | 5 | 5 | 5 | 5 | 5 | 5 | 5 | 5 |
| Magnesium (mg/100mL) | 0 | 1 | 5 | 5 | 5 | 5 | 5 | 5 |
| pH | 5.5 | 5.5 | 5.5 | 5.5 | 5.5 | 5.5 | 5.5 | 5.5 |
| Maltooligosaccharide/magnesium | - | 300 | 0 | 20 | 60 | 200 | 1000 | 2000 |
| Sensory rating | 6.0 | 5.7 | 1.7 | 3.3 | 3.7 | 4.0 | 5.3 | 5.7 |
| | | | | | | | | |
| | 9 | 10 | 11 | 12 | 13 | 14 | 15 | |
| Fujioligo #360 (g/100mL) | 0.4 | 0 | 0.4 | 0 | 0.4 | 14.9 | 0.4 | |
| Magnesium chloride (mg/100mL) | 167 | 41.8 | 41.8 | 41.8 | 41.8 | 41.8 | 41.8 | |
| Maltooligosaccharide (g/100mL) | 0.3 | 0 | 0.3 | 0 | 0.3 | 10.4 | 0.3 | |
| Degree of sweetness | 5 | 5 | 5 | 5 | 5 | 3 | 5 | |
| Magnesium (mg/100mL) | 20 | 5 | 5 | 5 | 5 | 5 | 5 | |
| pH | 5.5 | 4.0 | 4.0 | 7.0 | 7.0 | 5.5 | 6.2 | |
| Maltooligosaccharide/magnesium | 15 | 0 | 60 | 0 | 60 | 2080 | 60 | |
| Sensory rating | 3.0 | 2.0 | 4.3 | 1.3 | 3.3 | 3.0 | 3.7 | |

As evident from the table given above, the maltooligosaccharide functioned to reduce the harshness coming from magnesium. Also, particularly superior effect was observed when the maltooligosaccharide content and the weight ratio of maltooligosaccharide/magnesium fell within the particular ranges. The effect of a maltooligosaccharide was observed even in a sample prepared without the use of sugar (Trial Product 14).

A beverage was prepared using the particular amounts of ingredients as indicated in the table given below by following the same procedure as in Test Example 2, and then subjected to sensory testing by using the same procedure as in Test Example 1. The oligosaccharide used was Fujioligo G67 (produced by Nihon Shokuhin Kako Co., Ltd.; percent content of maltooligosaccharides composed of 3 to 7 sugar chain-constituting monosaccharides: 63%; percent maltohexaose+maltoheptaose content: 40%; degree of sweetness: 0.18).

**[Table 4]**

| | Amount added |
|---|---|
| Sodium magnesium (mg/100mL) | 41.8 |
| Fujioligo G67 (g/100mL) | 1.6 |
| Maltooligosaccharide (g/100mL) | 1.0 |
| Degree of sweetness | 5 |
| Magnesium (mg/100mL) | 5 |
| pH | 5.5 |
| Maltooligosaccharide/ magnesium | 200 |
| Sensory rating | 4.0 |

The effect to reduce the harshness coming from magnesium was observed even in a sample prepared using the maltooligosaccharide composed mainly of maltohexaose and maltoheptaose.

A milky tea-flavored water was prepared according to the recipe shown below in Table 5. After heat sterilization, sensory testing was done by the same procedure as in Test Example 1.

**[Table 5]**

| | Amount added |
|---|---|
| HFCS (with 55% fructose) (g/100mL) | 4.8 |
| Lactose (g/100mL) | 0.3 |
| Fujioligo #360 (g/100mL) | 1.0 |
| Citric acid | pH adjustment |
| Magnesium chloride (mg/100mL) | 41.8 |
| Black tea flavor (g/100mL) | 0.05 |
| Milk flavor (g/100mL) | 0.05 |
| Magnesium (mg/100mL) | 5 |
| Maltooligosaccharide (g/100mL) | 0.70 |
| Degree of sweetness | 5 |
| pH | 5.2 |
| Tannin | N.D. |
| Sensory rating | 5.3 |

It was confirmed that the addition of lactose and a maltooligosaccharide not only has an effect to reduce the harshness coming from magnesium, but also has an effect to enhance a milk flavor.

## Claims

1. A beverage comprising magnesium, and lactose and/or at least one type of maltooligosaccharide, wherein the beverage satisfies the following requirements (i) to (v):
(i) an absorbance at a wavelength of 660 nm of 0.06 or less;
(ii) a ΔE (color difference) value of 3.5 or less relative to pure water;
(iii) a magnesium content of 1 to 20 mg/100 mL;
(iv) a degree of sweetness of 3 to 10; and
(v) (a) and/or (b) as defined below should be satisfied:
(a) a lactose content of 0.1 g/100 mL or more;
(b) a total maltooligosaccharide content of 0.1 g/100 mL or more.

2. The beverage according to claim 1, wherein the beverage has a pH of 4 to 7.

3. A method for producing a beverage comprising magnesium and satisfying the following requirements (i) to (iv):
(i) an absorbance at a wavelength of 660 nm of 0.06 or less;
(ii) a ΔE (color difference) value of 3.5 or less relative to pure water;
(iii) a magnesium content of 1 to 20 mg/100 mL; and
(iv) a degree of sweetness of 3 to 10;
the method comprising the step of adding lactose and/or at least one type of maltooligosaccharide so as to ensure that (a) and/or (b) as defined below can be satisfied:
(a) a lactose content in the beverage should be 0.1 g/100 mL or more;
(b) a total maltooligosaccharide content in the beverage should be 0.1 g/100 mL or more.
